# EUROPÄISCHE PATENTSCHRIFT

(11) **EP 2 880 463 B1**
(45) Veröffentlichungstag und Bekanntmachung des Hinweises auf die Patenterteilung: **11.09.2019**
(21) Anmeldenummer: 13742005.5
(22) Anmeldetag: 22.07.2013
(51) Int. Cl.: G01S 15/32, G01S 7/524

(54) **VERFAHREN ZUM BETRIEB EINES ULTRASCHALLWANDLERS**
METHOD FOR OPERATING AN ULTRASONIC CONVERTER
PROCÉDÉ SEERVANT À FAIRE FONCTIONNER UN TRANSDUCTEUR ULTRASONORE

(30) Priorität: 02.08.2012 DE 102012213712
(43) Veröffentlichungstag der Anmeldung: 10.06.2015
(73) Patentinhaber: Robert Bosch GmbH, 70442 Stuttgart (DE)
(72) Erfinder: KIRCHNER, Tobias, 71636 Ludwigsburg (DE)
(86) Internationale Anmeldenummer: PCT/EP2013/065378
(87) Internationale Veröffentlichungsnummer: WO 2014/019876

(56) Entgegenhaltungen:
- DE-A1- 10 136 628
- DE-A1- 19 931 386

## Beschreibung

### Stand der Technik

Die Erfindung betrifft ein Verfahren zum Betrieb eines Ultraschallwandlers, bei dem Ultraschallsignale vom Ultraschallwandler ausgesendet und reflektierte Ultraschallechos wieder vom Ultraschallwandler empfangen werden, wobei der Ultraschallwandler parallel an einen Schwingkreis gekoppelt ist. Weiterhin betrifft die Erfindung eine Vorrichtung zum Betreiben eines Ultraschallwandlers umfassend ein Steuergerät, einen Signalgenerator und einen zu diesem in Reihe geschalteten Schwingkreis, wobei der zu betreibende Ultraschallwandler parallel zum Schwingkreis geschaltet ist. Die Erfindung betrifft zudem die Verwendung einer solchen Vorrichtung zum Betreiben von Ultraschallwandlern in einem Fahrassistenzsystem eines Fahrzeugs.

Ultraschallwandler kommen beispielsweise in Ultraschallsensoren zum Einsatz, mit denen sich der Abstand zwischen dem Ultraschallsensor und einem reflektierenden Objekt messen lässt. Der Ultraschallwandler dient darin als Sender und/oder Empfänger, wobei in einem ersten Schritt ein Ultraschallsignal abgestrahlt wird. Trifft das Ultraschallsignal auf ein reflektierendes Objekt, wird ein Ultraschallecho erzeugt, welches über den Ultraschallwandler wieder detektiert werden kann. Aus der Zeit, die zwischen Aussenden des Ultraschallsignals und dem Detektieren des Ultraschallechos vergangen ist, sowie der bekannten Schallgeschwindigkeit, kann die Entfernung zum reflektierenden Objekt berechnet werden.

Eingesetzt werden Ultraschallsensoren beispielsweise in Fahrassistenzsystemen zum Unterstützen eines Fahrers eines Fahrzeugs bei Fahrmanövern. Dabei wird zum Beispiel bei einem Einparkvorgang mit Hilfe eines oder mehrerer Ultraschallsensoren der Nahbereich des Fahrzeugs abgetastet. Dazu wird im Ultraschallwandler eine Schwingung angeregt, wodurch dieser beginnt, ein Ultraschallsignal abzustrahlen. Um Objekte in der Nähe des Fahrzeugs über ein empfangenes Ultraschallecho zu erkennen, muss die Schwingung des Ultraschallwandlers nach der Abstrahlung des Ultraschallsignals möglichst schnell gedämpft werden, da ein Ultraschallecho erst wahrgenommen werden kann, nachdem die Schwingung des Ultraschallwandlers zum Stillstand gekommen ist. Da ein Echo erst nach der Abklingzeit der Schwingung detektiert werden kann, ergibt sich zusammen mit der Schallgeschwindigkeit eine Mindestentfernung, die ein Objekt haben muss, um wahrgenommen zu werden. Durch eine bessere Dämpfung der Schwingung des Ultraschallwandlers kann dieser Mindestabstand reduziert werden.

Aus der DE 101 36 628 A1 ist ein Verfahren zum Betrieb eines Ultraschallwandlers zum Aussenden und Empfangen von Ultraschallwellen mittels einer Membran bekannt. Zum Aussenden von Ultraschallwellen wird die Membran für eine vorgegebene Zeitdauer angeregt. Nach dem Aussenden von Ultraschallwellen werden die Membranschwingungen gedämpft. Dazu werden über ein Steuergerät die Membranschwingungen ermittelt und die Membran mit einem der Schwingung entgegengesetztem Signal angeregt, wobei das Erfassen der Membranschwingungen und das Anregen der Membran zeitlich versetzt zueinander durchgeführt werden.

Aus DE 10 2009 027 221 A1 ist ein Verfahren zum Abgleichen von Ultraschallsensoren bekannt. Dabei wird in einer Phase der Sensor angeregt und Ultraschall ausgesendet. Im Anschluss an das Senden wird die Membran wieder zum Stillstand gebracht. Dazu wird der Treiber, mit dem der Sensor angeregt wird, hochohmig geschaltet, damit der Sensor frei schwingen kann. Ein Controller misst den Strom am Sensor und beginnt den Sensor gegenphasig anzusteuern, sobald der Controller den Nulldurchgang des Stromes erkennt. Nach einigen Perioden muss die Ansteuerung erneut mit dem Schwingkreis synchronisiert werden. Hierzu wird der Treiber wieder hochohmig geschaltet und eine selbstständige Schwingung abgewartet. Danach wird erneut gegenphasig angesteuert. Ein weiteres Beispiel ist aus DE 19931386 A1 vorbekannt.

Nachteilig an den aus dem Stand der Technik bekannten aktiven Dämpfungsverfahren, bei denen die Schwingung eines Ultraschallwandlers über eine gegenphasiges Anregungssignal gedämpft wird, ist, dass zur Erzeugung der gegenphasigen Anregung die Schwingungsfrequenz, Phase und Amplitude im Ultraschallwandler genau bekannt sein muss. Dies macht es erforderlich, zusätzliche Schaltungselemente zum Messen der Schwingung des Ultraschallwandlers vorzusehen. Des Weiteren muss der Signalgenerator eingerichtet sein, ein Signal mit einer bestimmten Phasenlage zu erzeugen.

### Offenbarung der Erfindung

Erfindungsgemäß wird ein Verfahren zum Betrieb eines Ultraschallwandlers nach Anspruch 1 vorgeschlagen, bei dem Ultraschallsignale vom Ultraschallwandler ausgesendet und reflektierte Ultraschallechos wieder vom Ultraschallwandler empfangen werden, wobei der Ultraschallwandler parallel an einen Schwingkreis gekoppelt ist, folgende Schritte umfassend:
(a) Anregen des Schwingkreises mit einem in Reihe zum Schwingkreis geschalteten Signalgenerator, wobei der Ultraschallwandler über den Schwingkreis angeregt wird und ein Ultraschallsignal aussendet,
(b) Dämpfen der Schwingung des Ultraschallwandlers,
(c) Empfangen des Ultraschallechos,
wobei zum Dämpfen der Schwingung des Ultraschallwandlers gemäß Schritt (b) die Anregung des Schwingkreises mit dem Signalgenerator beendet wird, der Signalgenerator für eine definierte Zeitdauer t₀ vom Schwingkreis getrennt wird und nach Ablauf der Zeitdauer t₀ wieder mit dem Schwingkreis gekoppelt wird, wobei eine beim Trennen des Signalgenerators (12) im Schwingkreis (18) auftretende Induktionsspannung mittels Spannungsbegrenzer (16) begrenzt wird, wobei die Phase der Schwingung im Schwingkreis gegenüber der Schwingung des Ultraschallwandlers verschoben wird und die phasenverschobene Schwingung des Schwingkreises die Schwingung des Ultraschallwandlers dämpft.

Die Anregung des Ultraschallwandlers erfolgt über einen Schwingkreis, der im einfachsten Fall durch eine Spule und einen Kondensator gebildet wird, wobei selbstverständlich Ausführungsformen mit weiteren Kondensatoren, Spulen, Widerständen und anderen Bauelementen möglich sind. Über den Schwingkreis wird eine Hochspannung erzeugt, die zur Anregung eines parallel zum Schwingkreis geschalteten Ultraschallwandlers dient. Der Schwingkreis wiederum wird über einen Signalgenerator angeregt, wobei die Anregungsfrequenz bevorzugt der Resonanzfrequenz des Schwingkreises entspricht. Des Weiteren ist es bevorzugt, dass die Resonanzfrequenz des Schwingkreises einer Resonanzfrequenz des Ultraschallwandlers entspricht.

Zum Aussenden eines Ultraschallsignals wird über den in Reihe zum Schwingkreis geschalteten Signalgenerator eine Schwingung im Schwingkreis angeregt. Dadurch liegt an dem parallel zum Schwingkreis gekoppelten Ultraschallwandler eine Wechselspannung an. Diese Wechselspannung wird über einen Aktor im Ultraschallwandler in eine mechanische Schwingung umgewandelt. Der Aktor ist beispielsweise als Piezoelement ausgeführt und mit einer Membran des Ultraschallwandlers mechanisch verbunden. Aufgrund der ausgeführten mechanischen Schwingung beginnt der Ultraschallwandler ein Ultraschallsignal auszusenden.

Im zweiten Schritt (b) des Verfahrens wird die Schwingung des Ultraschallwandlers gedämpft. Für eine aktive Dämpfung des Ultraschallwandlers muss dieser über eine Wechselspannung angeregt werden, deren Phase gegenüber der Phase der Schwingung des Ultraschallwandlers verschoben ist. Die Phase der Schwingung im parallel zum Ultraschallwandler gekoppelten Schwingkreis wird durch eine Unterbrechung der Verbindung zwischen Schwingkreis und dem Signalgenerator für eine definierte Zeitdauer t₀ verändert. Die Unterbrechung der Verbindung verändert die Eigenschaften des Schwingkreises, wobei sich dessen Dämpfung erhöht. Aufgrund der durch das Trennen erhöhten Dämpfung des Schwingkreises wird die Schwingung für die Zeitdauer t₀ angehalten. Nach Ablauf der definierten Zeitdauer t₀ wird der Signalgenerator wieder mit dem Schwingkreis gekoppelt, wodurch der Stromfluss und die Schwingung im Schwingkreis wieder hergestellt werden. Die Schwingung wird mit gleicher Frequenz jedoch mit verschobener Phase fortgesetzt. Die Amplitude ist aufgrund von Verlusten in den Bauteilen reduziert.

Aufgrund der Unterbrechung der Schwingung im Schwingkreis ist diese nun gegenüber der Schwingung des Ultraschallwandlers phasenverschoben, wodurch auch die Anregung des Ultraschallwandlers mit einer phasenverschobenen Wechselspannung erfolgt. Aufgrund der phasenverschobenen Anregung wird die Schwingung des Ultraschallwandlers aktiv gedämpft.
In einer bevorzugten Ausführungsform des Verfahrens wird die Zeitdauer t₀ so gewählt, dass die Schwingung im Schwingkreis bei der Dämpfung gemäß Schritt b) gegenüber der Schwingung des Ultraschallwandlers um 180° +/- 10° phasenverschoben ist.

Zur Trennung des Signalgenerators vom Schwingkreis wird ein Schaltungselement benötigt, welches mit einem Steuersignal betätigt werden kann. Dabei wird der Eingang des Schaltungselements mit dem Signalgenerator und der Ausgang des Schaltungselements mit dem Schwingkreis verbunden. Der Steuereingang kann mit einem Steuergerät gekoppelt werden. In einer bevorzugten Ausführungsform des Verfahrens wird als Schaltungselement ein Tri-State Schaltungselement verwendet, dessen Ausgang zur Trennung des Signalgenerators vom Schwingkreis in einen hochohmigen Zustand geschaltet wird. Unter hochohmig werden Widerstände größer als 1 MΩ verstanden. Wird das Tri-State Schaltungselement in den hochohmigen Zustand geschaltet, verhält sich das Schaltungselement aufgrund des hohen Widerstands wie ein geöffneter Schalter, so dass kein Strom fließen kann. In weiteren Ausführungsformen kann das Schaltungselement auch als Triac Schaltungselement oder Optotriac Schaltungselement ausgeführt sein. In einer weiteren Ausführungsform kann das Schaltungselement auch Teil des Signalgenerators sein.

Zum Einstellen der Phasenverschiebung der Schwingung im Schwingkreis gegenüber der Schwingung des Ultraschallwandlers wird die Zeitspanne t₀ abhängig von der Frequenz der am Signalgenerator eingestellten Schwingung, der elektrischen Eigenschaften des Signalgenerators, der elektrischen Eigenschaften des Schwingkreises, die Schaltgeschwindigkeit des Schaltungselements, der Widerstand des Schaltungselements oder einer Kombination aus mindestens zwei dieser Parameter gewählt. Zur Bestimmung der Zeitspanne t₀, mit der sich die benötigte Phasenverschiebung im Schwingkreis einstellt, kann auch vorübergehend ein Messgerät an den Schwingkreis angeschlossen werden und die Zeitspanne t₀ in einem iterativen Verfahren durch mehrere Versuche ermittelt werden.

In einer bevorzugten Ausführungsform des Verfahrens wird die beim Trennen des Signalgenerators im Schwingkreis auftretende Induktionsspannung durch einen Spannungsbegrenzer begrenzt. Der Spannungsbegrenzer kann beispielsweise über ein oder mehrere Zenerdioden, Kondensatoren und/oder Widerstände realisiert werden.

Des Weiteren betrifft die Erfindung eine Vorrichtung zum Betreiben eines Ultraschallwandlers nach Anspruch 5 umfassend ein Steuergerät, einen Signalgenerator und einen zu diesem in Reihe geschalteten Schwingkreis, wobei der zu betreibende Ultraschallwandler parallel zum Schwingkreis geschaltet ist und wobei die Vorrichtung des Weiteren ein Mittel zum Trennen des Signalgenerators vom Schwingkreis umfasst und das Steuergerät eingerichtet ist, nach dem Beenden einer Anregung des Schwingkreises durch den Signalgenerator den Signalgenerator für eine Zeitdauer t₀ vom Schwingkreis zu trennen, wobei zwischen dem Signalgenerator (12) und dem Schwingkreis (18) ein Spannungsbegrenzer (16) angeordnet ist, wobei ein Spannungsbegrenzer (16) eine oder mehrere Zenerdioden, Kondensatoren und/oder Widerstände aufweist. wodurch die Phase der Schwingung gegenüber der Schwingung des Ultraschallwandlers verschoben wird.

Der Schwingkreis ist beispielsweise als LC-Schwingkreis realisiert und umfasst in der einfachsten Ausführungsform einen Kondensator und eine Spule. Je nach Ausführungsform kann der Schwingkreis weitere Bauelemente wie Spulen, Kondensatoren und Widerstände umfassen. Der Signalgenerator ist mit dem Schwingkreis in Reihe geschaltet, wobei zwischen dem Schwingkreis und dem Signalgenerator ein Mittel zum Trennen des Signalgenerators vom Schwingkreis angeordnet ist. Zum Trennen des Signalgenerators vom Schwingkreis ist es ausreichend, wenn die Verbindung zwischen den beiden Elementen einen großen Widerstand aufweist, beispielsweis größer als 1 MΩ. Der zu betreibende Ultraschallwandler wird parallel zum Schwingkreis geschaltet, so dass er bei einer Schwingung im Schwingkreis über eine Wechselspannung angeregt wird.

Das Steuergerät kontrolliert den Signalgenerator und das Mittel zum Trennen des Signalgenerators vom Schwingkreis, so dass es zum Dämpfen der Schwingung des Ultraschallwandlers die Anregung des Schwingkreises beenden und den Signalgenerator für die Zeitdauer t₀ vom Schwingkreis trennen kann. Nach verstreichen der Zeitdauer t₀ wird der Schwingkreis wieder an den Signalgenerator gekoppelt.

Wird der Signalgenerator vom Schwingkreis getrennt, tritt in der Spule des Schwingkreises eine Induktionsspannung auf, die die einzelnen Komponenten der Vorrichtung beeinträchtigen kann. Daher ist es bevorzugt, zwischen dem Signalgenerator und dem Schwingkreis einen Spannungsbegrenzer anzuordnen. Der Spannungsbegrenzer kann mit Hilfe einer oder mehrerer Zenerdioden, Kondensatoren, und/oder Widerstände realisiert werden. In einer Ausführungsform werden dazu zwei gegenläufig in Reihe geschaltete Zenerdioden, ein Widerstand und ein Kondensator parallel geschaltet.

In einer bevorzugten Ausführungsform der Vorrichtung ist das Mittel zum Trennen des Signalgenerators vom Schwingkreis als Tri-State Schaltungselement ausgeführt, dessen Eingang mit dem Signalgenerator und dessen Ausgang mit dem Schwingkreis gekoppelt ist, wobei zum Trennen des Signalgenerators vom Schwingkreis der Ausgang in einen hochohmigen Zustand schaltbar ist. Unter hochohmig wird dabei ein Widerstand größer als 1 MΩ verstanden. Das Mittel zum Trennen des Signalgenerators vom Schwingkreis kann auch als Triac oder Optotriac Schaltungselement ausgeführt werden. Des Weiteren ist es denkbar, das Mittel zum Trennen des Schwingkreises vom Signalgenerator in den Signalgenerator zu integrieren.

Des Weiteren betrifft die Erfindung die Verwendung der Vorrichtung zum Betreiben von Ultraschallwandlern in einem Fahrassistenzsystem eines Fahrzeugs.

### Vorteile der Erfindung

Das erfindungsgemäße Verfahren zum Betrieb eines Ultraschallwandlers ermöglicht ein aktives Dämpfen der Schwingung eines Ultraschallwandlers nach dem Aussenden eines Ultraschallsignals, ohne dass die Schwingung des Ultraschallwandlers ermittelt werden muss. Dadurch können Schaltungselemente, die zum Messen der Schwingung erforderlich sind, entfallen. Dadurch wird zum einen die zum Betreiben eines Ultraschallwandlers erforderliche Vorrichtung vereinfacht, zum anderen wird eine Beeinflussung der Eigenschaften des Ultraschallwandlers durch zusätzliche Messeinrichtungen vermieden.

Des Weiteren wird die Ansteuerung des Signalgenerators vorteilhaft vereinfacht, da dieser für eine Dämpfung der Schwingung nicht auf eine bestimmte Phase oder Amplitude einjustiert werden muss.

Da das vorgeschlagene Verfahren die Eigenschaften des Ultraschallwandlers nicht beeinträchtigt, lässt es sich leicht mit anderen Dämpfungsverfahren kombinieren. So kann beispielsweise zusätzlich im Ultraschallwandler ein Dämpfungsschaum eingesetzt werden.

### Kurze Beschreibung der Zeichnungen

Ausführungsbeispiele der Erfindung sind in den Zeichnungen dargestellt und in der nachfolgenden Beschreibung näher erläutert.
- Figur 1: zeigt eine schematische Darstellung der Vorrichtung zum Betrieb eines Ultraschallwandlers,
- Figur 2a: zeigt den Stromverlauf im Schwingkreis,
- Figur 2b: zeigt die Steuerspannung des ersten Schaltungselements,
- Figur 2c: zeigt den Stromverlauf im Ultraschallwandler,
- Figur 2d: zeigt die Ausgangsspannung des Signalgenerators.

### Ausführungsformen der Erfindung

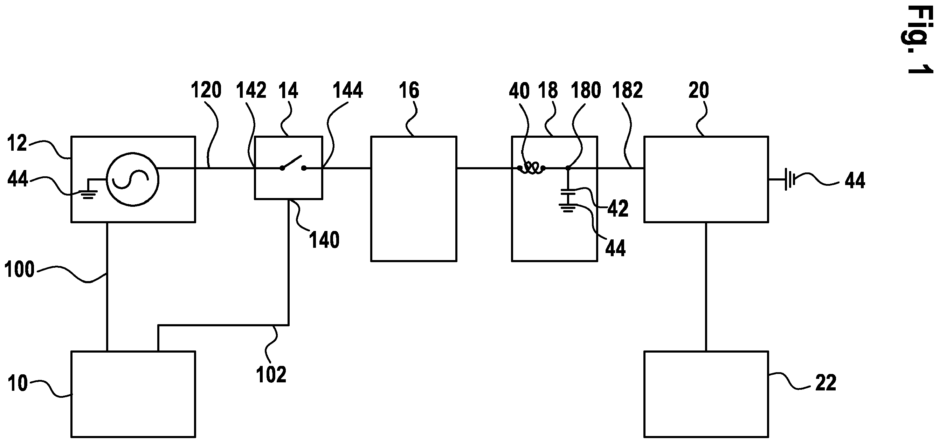

In Figur 1 ist die Vorrichtung zum Betrieb eines Ultraschallwandlers schematisch dargestellt.

Die Vorrichtung umfasst einen Signalgenerator 12, der mit einer Masse 44 und über eine Signalleitung 120 mit einem Eingang 142 eines Tri-State Schaltungselements 14 verbunden ist. Das Tri-State Schaltungselement 14 weist des Weiteren einen Ausgang 144 und einen Steuereingang 140 auf. Der Steuereingang 140 ist über eine Leitung 102 mit einem Steuergerät 10 verbunden. Das Steuergerät 10 steht über eine weitere Leitung 100 mit dem Signalgenerator 12 in Verbindung. Der Ausgang 144 des Tri-State Schaltungselements 14 ist über einen Spannungsbegrenzer 16 mit einem Schwingkreis 18 verbunden.

Der Schwingkreis 18 ist in Figur 1 schematisch über eine Spule 40 und einen Kondensator 42 dargestellt. Dabei ist die Spule 40 mit einem Anschluss an den Spannungsbegrenzer 16 angekoppelt und mit ihrem zweiten Anschluss an den Kondensator 42 angeschlossen. Der erste Anschluss des Kondensators 42 wiederum ist mit der Spule 40 verbunden und der zweite Anschluss des Kondensators 42 ist mit der Masse 44 gekoppelt. Der Signalgenerator 12 und der Schwingkreis 18 sind somit in Reihe geschaltet.

Von der Verbindungsstelle 180 zwischen der Spule 40 und dem Kondensator 42 zweigt eine Leitung 182 ab. Über die Leitung 182 wird ein Ultraschallwandler 20 mit dem Schwingkreis 18 gekoppelt. Der Stromkreis wird über eine Verbindung zur Masse 44 geschlossen. Der Ultraschallwandler 20 ist demnach parallel an den Schwingkreis 18 angekoppelt. Der Ultraschallwandler 20 steht zudem mit einem Signalempfänger 22 in Verbindung, um empfangene Ultraschallechos auszuwerten.

Zum Aussenden eines Ultraschallsignals gemäß Schritt (a) des Verfahrens wird über den Signalgenerator 12 der Schwingkreis 18 angeregt. Dazu wird der Signalgenerator 12 vom Steuergerät 10 angesteuert, so dass dieser ein Signal mit vorgegebener Frequenz und Amplitude erzeugt. Des Weiteren steuert das Steuergerät 10 das Tri-State Schaltungselement 14 an, so dass der Signalgenerator 12 mit dem Schwingkreis 18 in Verbindung steht. Nach dem Ankoppeln des Ultraschallwandlers 20 an den Schwingkreis 18 wird der Ultraschallwandler 20 zu mechanischen Schwingungen angeregt und sendet ein Ultraschallsignal aus.

Im Schritt (b) des Verfahrens wird die Schwingung des Ultraschallwandlers 20 gedämpft. Dazu wird vom Steuergerät 10 die Signalerzeugung durch den Signalgenerator 12 beendet. Des Weiteren wird vom Steuergerät 10 das Tri-State Schaltungselement 14 so angesteuert, dass der Signalgenerator 12 vom Schwingkreis 18 für eine definierte Zeitdauer t₀ abgetrennt wird. Die Zeitspanne t₀ wird dazu vorzugsweise so gewählt, dass sich im Schwingkreis 18 gegenüber dem Ultraschallwandler 20 eine Phasenverschiebung von 180° +/- 10° einstellt. Durch das Trennen des Signalgenerators 12 vom Schwingkreis 18 wird die Dämpfung im Schwingkreis 18 erhöht, so dass die Schwingung des Schwingkreises angehalten ist. Spannungen, die durch Selbstinduktion in der Spule 40 entstehen können, werden durch den Spannungsbegrenzer 16 begrenzt, der beispielsweise über eine oder mehrere Zenerdioden, Widerstände und Kondensatoren ausgeführt ist. In einer Ausführungsform werden dazu zwei gegenläufig in Reihe geschaltete Zenerdioden, ein Widerstand und ein Kondensator parallel geschaltet.

Nach Ablauf der Zeitspanne t₀ wird der Signalgenerator 12 wieder an den Schwingkreis 18 angekoppelt, wodurch die zuvor unterbrochene Schwingung im Schwingkreis 18 fortgesetzt wird. Dabei wird die ursprüngliche Frequenz beibehalten, jedoch ist die Phase der Schwingung nun verschoben. Die Amplitude der Schwingung im Schwingkreis 18 ist aufgrund von Verlusten an den Bauteilen des Schwingkreises und insbesondere aufgrund der Selbstinduktion in der Spule 40 verringert.
Durch die Schwingung im Schwingkreis 18, die nun gegenüber der Schwingung des Ultraschallwandlers phasenverschoben ist, wird der Ultraschallwandler 20 mit einer phasenverschobenen Spannung angeregt. Dadurch wird die Schwingung des Ultraschallwandlers gedämpft. Um diese aktive Dämpfung zu ermöglichen, bleibt der Ultraschallwandler 20 die ganze Zeit an den Schwingkreis angekoppelt. Nachdem die Schwingung des Ultraschallwandlers 20 beendet worden ist, ist der Ultraschallwandler für das Empfangen des Ultraschallechos gemäß Schritt (c) des Verfahrens bereit. Ein empfangenes Ultraschallecho kann über den an den Ultraschallwandler 20 angekoppelten Signalempfänger 22 ausgewertet werden.

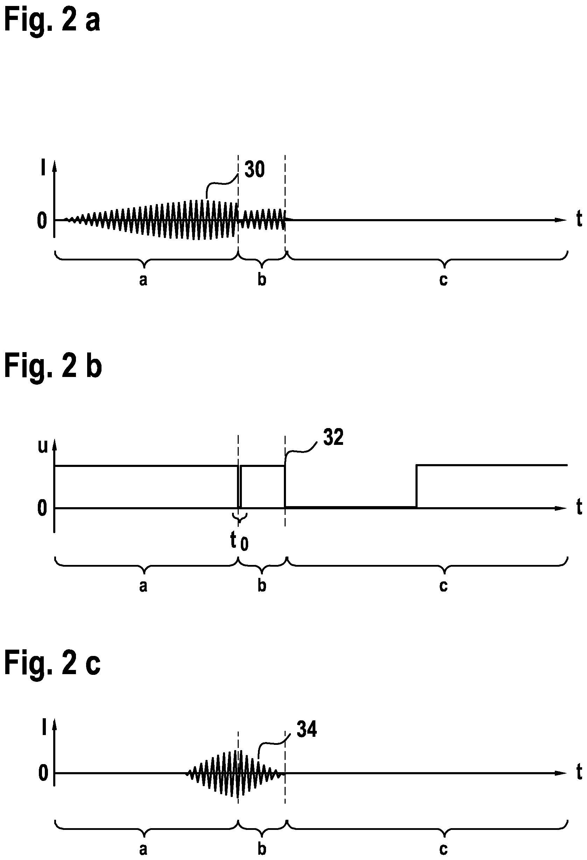

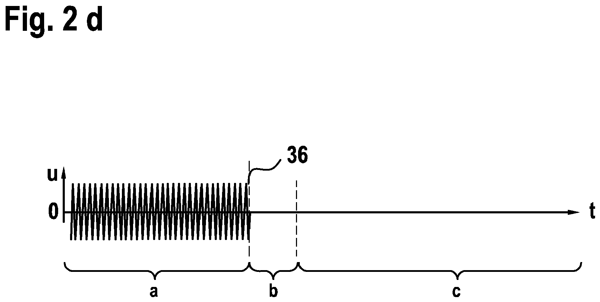

In den Figuren 2a bis 2d sind die Spannungs- bzw. Stromverläufe verschiedener Komponenten der Vorrichtung zum Betreiben eines Ultraschallwandlers dargestellt. Dabei zeigt Figur 2a den Stromverlauf im Schwingkreis 18, Figur b zeigt die Steuerspannung, mit der das Tri-State Schaltungselement 14 angesteuert wird, Figur 2c zeigt den Stromverlauf im Ultraschallwandler 20 und Figur 2d zeigt das Ausgangssignal des Signalgenerators 12.

Im Schritt (a) des Verfahrens wird vom Signalgenerator 12 das Signal 36 ausgegeben. Dieses ist in Figur 2d dargestellt. Die Steuerspannung des Tri-State Schaltungselements 14 ist während der ganzen Zeitdauer des Schritts (a) auf einem hohen Signalpegel. Bei einem hohen Signalpegel sind der Eingang und der Ausgang des Tri-State Schaltungselements 14miteinander verbunden. Bei einem niedrigen Signalpegel am Steuereingang wird der Ausgang in den hochohmigen Zustand geschaltet. Nach dem Beginn der Anregung steigt der Strom 34 im Ultraschallwandler 20 an und erreicht am Ende des Schritts (a) sein Maximum.

Im Schritt (b) des Verfahrens wird die Schwingung des Ultraschallwandlers 20 gedämpft. Dazu wird die Anregung des Schwingkreises 18 durch den Signalgenerator 12 beendet und das Ausgangssignal 36 verschwindet. Zudem wird die Steuerspannung 32 des Tri-State Schaltungselements 14 für eine Zeitspanne t₀ auf einen niedrigen Pegel abgesenkt. Nach Verstreichen der Zeitspanne t₀ wird die Steuerspannung 32 wieder auf den hohen Pegel eingestellt.

Durch das Unterbrechen der Kopplung des Signalgenerators 12 an den Schwingkreis 18 wird die Schwingung 30 des Stroms im Schwingkreis 18 unterbrochen und anschließend mit veränderter Phase und verringerter Amplitude, jedoch mit gleicher Frequenz, fortgesetzt. Durch die phasenverschobene Schwingung im Schwingkreis 18 wird der Ultraschallwandler 20 mit einer zu seiner Schwingung phasenverschobenen Spannung angeregt, wodurch seine Schwingung rasch gedämpft wird. Dies äußerst sich in einer Abnahme des Stromes 34 im Ultraschallwandler 20.

## Patentansprüche

1. Verfahren zum Betrieb eines Ultraschallwandlers (20), bei dem Ultraschallsignale vom Ultraschallwandler (20) ausgesendet und reflektierte Ultraschallechos wieder vom Ultraschallwandler (20) empfangen werden, wobei der Ultraschallwandler (20) parallel an einen Schwingkreis (18) gekoppelt ist, umfassend folgende Schritte:
(a) Anregen des Schwingkreises (18) mit einem in Reihe zum Schwingkreis (18) geschalteten Signalgenerator (12), wobei der Ultraschallwandler (20) über den Schwingkreis (18) angeregt wird und ein Ultraschallsignal aussendet,
(b) Dämpfen der Schwingung des Ultraschallwandlers (20),
(c) Empfangen des Ultraschallechos,
**dadurch gekennzeichnet, dass** zum Dämpfen der Schwingung des Ultraschallwandlers (20) gemäß Schritt (b) die Anregung des Schwingkreises (18) mit dem Signalgenerator (12) beendet wird und der Signalgenerator (12) für eine definierte Zeitdauer to vom Schwingkreis (20) getrennt wird, wobei eine beim Trennen des Signalgenerators (12) im Schwingkreis (18) auftretende Induktionsspannung mittels Spannungsbegrenzer (16) begrenzt wird, wobei der Signalgenerator (12) nach Ablauf der Zeitdauer t₀ wieder mit dem Schwingkreis (18) gekoppelt wird, wobei die Phase der Schwingung im Schwingkreis (20) gegenüber der Schwingung des Ultraschallwandlers (20) verschoben wird und die phasenverschobene Schwingung des Schwingkreises (18) die Schwingung des Ultraschallwandlers (20) dämpft.

2. Verfahren nach Anspruch 1, **dadurch gekennzeichnet, dass** die Zeitdauer t₀ so gewählt wird, dass die Schwingung im Schwingkreis (18) bei der Dämpfung gemäß Schritt (b) gegenüber der Schwingung des Ultraschallwandlers (20) um 180° +/- 10° phasenverschoben ist.

3. Verfahren nach Anspruch 1 oder 2, **dadurch gekennzeichnet, dass** zwischen dem Signalgenerator und dem Schwingkreis ein Tri-State Schaltungselement (14), ein Triac Schaltungselement oder ein Optotriac Schaltungselement angeordnet ist, dessen Eingang (142) mit dem Signalgenerator (12) gekoppelt ist und dessen Ausgang (144) mit dem Schwingkreis (18) gekoppelt ist, wobei zur Trennung des Signalgenerators (12) vom Schwingkreis (18) dessen Ausgang (144) in einen hochohmigen Zustand geschaltet wird.

4. Verfahren nach einem der Ansprüche 1 bis 3, **dadurch gekennzeichnet, dass** bei der Wahl der Zeitdauer t₀ die Frequenz der am Signalgenerator (12) eingestellten Schwingung, die elektrischen Eigenschaften des Signalgenerators (12), die elektrischen Eigenschaften des Schwingkreises (18), die Schaltgeschwindigkeit des Schaltungselements (14), der Widerstand des Schaltungselements (14) oder eine Kombination aus mindestens zwei dieser Parameter berücksichtigt wird.

5. Vorrichtung zum Betreiben eines Ultraschallwandlers (20) umfassend ein Steuergerät (10), einen Signalgenerator (12), und einen zu diesem in Reihe geschalteten Schwingkreis (18), wobei der zu betreibende Ultraschallwandler (20) parallel zum Schwingkreis (18) geschaltet ist, **dadurch gekennzeichnet, dass** die Vorrichtung des Weiteren ein Mittel zum Trennen des Signalgenerators (12) vom Schwingkreis (18) umfasst und das Steuergerät (10) eingerichtet ist, nach dem Beenden einer Anregung des Schwingkreises (18) durch den Signalgenerator (12) den Signalgenerator (12) für eine Zeitdauer t₀ vom Schwingkreis (18) zu trennen, wodurch die Phase der Schwingung gegenüber der Schwingung des Ultraschallwandlers (20) verschoben wird, wobei zwischen dem Signalgenerator (12) und dem Schwingkreis (18) ein Spannungsbegrenzer (16) angeordnet ist, wobei der Spannungsbegrenzer (16) eine oder mehrere Zenerdioden, Kondensatoren und/oder Widerstände aufweist.

6. Vorrichtung nach Anspruch 5, **dadurch gekennzeichnet, dass** das Mittel zum Trennen des Signalgenerators vom Schwingkreis als Tri-State Schaltungselement (14), als Triac Schaltungselement oder als Optotriac Schaltungselement ausgeführt ist, dessen Eingang (142) mit dem Signalgenerator (12) und dessen Ausgang (144) mit dem Schwingkreises (18) gekoppelt ist, wobei zum Trennen des Signalgenerators (12) vom Schwingkreis (18) der Ausgang (144) in einen hochohmigen Zustand schaltbar ist.

7. Verwendung der Vorrichtung nach einem der Ansprüche 5 oder 6 zum Betreiben von Ultraschallwandlern (20) in einem Fahrassistenzsystem eines Fahrzeugs.

## Claims

1. Method for operating an ultrasonic transducer (20), in which ultrasonic signals are emitted by the ultrasonic transducer (20) and reflected ultrasonic echoes are received again by the ultrasonic transducer (20), wherein the ultrasonic transducer (20) is coupled to a resonant circuit (18) in parallel, comprising the following steps:
(a) exciting the resonant circuit (18) by means of a signal generator (12) connected in series with the resonant circuit (18), wherein the ultrasonic transducer (20) is excited via the resonant circuit (18) and emits an ultrasonic signal,
(b)damping the oscillation of the ultrasonic transducer (20),
(c)receiving the ultrasonic echo,
**characterized in that** for the purpose of damping the oscillation of the ultrasonic transducer (20) in accordance with step (b), the excitation of the resonant circuit (18) by means of the signal generator (12) is ended and the signal generator (12) is disconnected from the resonant circuit (20) for a defined time duration to, wherein an induced voltage occurring in the resonant circuit (18) upon the disconnection of the signal generator (12) is limited by means of a voltage limiter (16), wherein the signal generator (12) is coupled to the resonant circuit (18) again after the time duration to has elapsed, wherein the phase of the oscillation of the resonant circuit (20) is shifted relative to the oscillation of the ultrasonic transducer (20) and the phase-shifted oscillation of the resonant circuit (18) damps the oscillation of the ultrasonic transducer (20).

2. Method according to Claim 1, **characterized in that** the time duration t₀ is chosen such that the oscillation of the resonant circuit (18) is phase-shifted by 180° +/- 10° relative to the oscillation of the ultrasonic transducer (20) during the damping in accordance with step (b).

3. Method according to Claim 1 or 2, **characterized in that** there is arranged between the signal generator and the resonant circuit a tristate circuit element (14), a triac circuit element or an optotriac circuit element, the input (142) of which is coupled to the signal generator (12) and the output (144) of which is coupled to the resonant circuit (18), wherein for the purpose of disconnecting the signal generator (12) from the resonant circuit (18), the output (144) of said circuit element is switched into a high-impedance state.

4. Method according to any of Claims 1 to 3, **characterized in that** the frequency of the oscillation set at the signal generator (12), the electrical properties of the signal generator (12), the electrical properties of the resonant circuit (18), the switching speed of the circuit element (14), the resistance of the circuit element (14) or a combination of at least two of these parameters is taken into consideration when choosing the time duration t₀.

5. Device for operating an ultrasonic transducer (20) comprising a control unit (10), a signal generator (12), and a resonant circuit (18) connected in series with the latter, wherein the ultrasonic transducer (20) to be operated is connected in parallel with the resonant circuit (18), **characterized in that** the device furthermore comprises a means for disconnecting the signal generator (12) from the resonant circuit (18) and the control unit (10) is configured, after an excitation of the resonant circuit (18) by the signal generator (12) has ended, to disconnect the signal generator (12) from the resonant circuit (18) for a time duration t₀, as a result of which the phase of the oscillation is shifted relative to the oscillation of the ultrasonic transducer (20), wherein a voltage limiter (16) is arranged between the signal generator (12) and the resonant circuit (18), wherein the voltage limiter (16) has one or more Zener diodes, capacitors and/or resistors.

6. Device according to Claim 5, **characterized in that** the means for disconnecting the signal generator from the resonant circuit is embodied as a tristate circuit element (14), as a triac circuit element or as an optotriac circuit element, the input (142) of which is coupled to the signal generator (12) and the output (144) of which is coupled to the resonant circuit (18), wherein, for the purpose of disconnecting the signal generator (12) from the resonant circuit (18), the output (144) is switchable into a high-impedance state.

7. Use of the device according to either of Claims 5 and 6 for operating ultrasonic transducers (20) in a driver assistance system of a vehicle.

## Revendications

1. Procédé servant à faire fonctionner un transducteur ultrasonore (20), selon lequel des signaux ultrasonores sont émis par le transducteur ultrasonore (20) et des échos ultrasonores réfléchis sont de nouveau reçus par le transducteur ultrasonore (20), dans lequel le transducteur ultrasonore (20) est couplé en parallèle à un circuit oscillant (18), comprenant les étapes suivantes :
(a) l'excitation du circuit oscillant (18) par un générateur de signaux (12) monté en série avec le circuit oscillant (18), dans lequel le transducteur ultrasonore (20) est excité par l'intermédiaire du circuit oscillant (18) et émet un signal ultrasonore,
(b) l'amortissement de l'oscillation du transducteur ultrasonore (20),
(c) la réception de l'écho ultrasonore,
**caractérisé en ce que**, pour l'amortissement de l'oscillation du transducteur ultrasonore (20) selon l'étape (b), l'excitation du circuit oscillant (18) par le générateur de signaux (12) est interrompue et le générateur de signaux (12) est séparé du circuit oscillant (20) durant une période définie to, dans lequel une tension d'induction se produisant dans le circuit oscillant (18) pendant la séparation du générateur de signaux (12) est limitée au moyen de limiteurs de tension (16), dans lequel le générateur de signaux (12) est couplé de nouveau au circuit oscillant (18) après écoulement de la période to, et dans lequel la phase de l'oscillation dans le circuit oscillant (20) est décalée par rapport à l'oscillation du transducteur ultrasonore (20) et l'oscillation déphasée du circuit oscillant (18) amortit l'oscillation du transducteur ultrasonore (20).

2. Procédé selon la revendication 1, **caractérisé en ce que** la période to est choisie de manière à ce que l'oscillation dans le circuit oscillant (18) soit déphasée de 180° +/- 10° par rapport à celle du transducteur ultrasonore (20) lors de l'amortissement selon l'étape (b).

3. Procédé selon la revendication 1 ou 2, **caractérisé en ce qu'**un élément de circuit à trois états (14), un élément de circuit triac ou un élément de circuit optotriac, dont l'entrée (142) est couplée au générateur de signaux (12) et dont la sortie (144) est couplée au circuit résonant (18), est disposé entre le générateur de signaux et le circuit résonant, dans lequel, pour séparer le générateur de signaux (12) du circuit oscillant (18), sa sortie (144) est commutée dans un état à haute impédance.

4. Procédé selon l'une des revendications 1 à 3, **caractérisé en ce que**, lors de la sélection de la période to, la fréquence de l'oscillation réglée au niveau du générateur de signaux (12), les propriétés électriques du générateur de signaux (12), les propriétés électriques du circuit oscillant (18), la vitesse de commutation de l'élément de circuit (14), la résistance de l'élément de circuit (14) ou une combinaison d'au moins deux de ces paramètres sont prises en compte.

5. Dispositif servant à faire fonctionner un transducteur ultrasonore (20) comprenant un appareil de commande (10), un générateur de signaux (12) et un circuit oscillant (18) qui est relié en série à celui-ci, dans lequel le transducteur ultrasonore (20) à faire fonctionner est connecté en parallèle avec le circuit oscillant (18), **caractérisé en ce que** le dispositif comprend en outre un moyen destiné à séparer le générateur de signaux (12) du circuit oscillant (18) et **en ce que** l'appareil de commande (10) est conçu pour séparer le générateur de signaux (12) du circuit oscillant (18) pendant une période to après la fin d'une excitation du circuit oscillant (18) par le générateur de signaux (12), de sorte que la phase de l'oscillation est décalée par rapport à l'oscillation du transducteur ultrasonore (20), dans lequel un limiteur de tension (16) est disposé entre le générateur de signaux (12) et le circuit oscillant (18) et dans lequel le limiteur de tension (16) comporte une ou plusieurs diodes Zener, un ou plusieurs condensateurs et/ou une ou plusieurs résistances.

6. Dispositif selon la revendication 5, **caractérisé en ce que** le moyen destiné à séparer le générateur de signaux du circuit oscillant sont réalisés sous la forme d'un élément de circuit à trois états (14), d'un élément de circuit triac ou d'un élément de circuit optotriac, dont l'entrée (142) est reliée au générateur de signaux (12) et dont la sortie (144) est reliée au circuit oscillant (18), dans lequel la sortie (144) peut être commutée dans un état à haute impédance pour séparer le générateur de signaux (12) du circuit oscillant (18).

7. Utilisation du dispositif selon l'une des revendications 5 ou 6 pour faire fonctionner des transducteurs ultrasonores (20) dans un système d'aide à la conduite d'un véhicule.
